# EUROPEAN PATENT APPLICATION

(11) **EP 4 844 373 A1**
(43) Date of publication of application: **25.11.2026**
(21) Application number: 24918477.1
(22) Date of filing: 05.12.2024
(51) Int. Cl.: G01N 21/17

(54) **POLARIZATION-SENSITIVE OPTICAL COHERENCE TOMOGRAPHY APPARATUS**

(30) Priority: 19.01.2024 JP 2024006868
(71) Applicant: DAIKIN INDUSTRIES, LTD., Osaka-shi, Osaka 530-0001 (JP)
(72) Inventor: NOUMI, Masao, Osaka-Shi, Osaka 530-0001 (JP); KITAMURA, Hiroki, Osaka-Shi, Osaka 530-0001 (JP)
(74) Representative: Hoffmann Eitle
(86) International application number: PCT/JP2024/043056
(87) International publication number: WO 2025/154420

(57) **Abstract**

The disclosure aims to provide a polarization-sensitive optical coherence tomography apparatus capable of acquiring a tomographic image that more faithfully reflects a polarization characteristic of a sample. The disclosure relates to a polarization-sensitive optical coherence tomography apparatus for acquiring a signal representing a polarization characteristic of a sample from interference light between reflected light of measurement light applied to the sample and reference light for reference, the apparatus including two reference-light collimators arranged to face each other on an optical path of the reference light, the reference-light collimators being configured to adjust an optical path length of the reference light.

## Description

### TECHNICAL FIELD

The disclosure relates to polarization-sensitive optical coherence tomography apparatuses.

### BACKGROUND ART

Optical coherence tomography (OCT) is mainly used for tomographic imaging of biological organs such as eyeballs in the medical field.

Patent Literature 1 discloses a polarization OCT system, wherein a polarization controller is disposed on each of a fiber for a measurement light beam, a fiber for a reference light beam, and a fiber for a detector.

### CITATION LIST

### - Patent Literature

Patent Literature 1: JP 2015-130974 A

### SUMMARY OF INVENTION

### - Technical Problem

The disclosure aims to provide a polarization-sensitive optical coherence tomography apparatus capable of acquiring a tomographic image that more faithfully reflects a polarization characteristic of a sample.

### - Solution to Problem

The disclosure (1) relates to a polarization-sensitive optical coherence tomography apparatus for acquiring a signal representing a polarization characteristic of a sample from interference light between reflected light of measurement light applied to the sample and reference light for reference, the apparatus including two reference-light collimators arranged to face each other on an optical path of the reference light, the reference-light collimators being configured to adjust an optical path length of the reference light.

The disclosure (2) relates to the polarization-sensitive optical coherence tomography apparatus according to the disclosure (1), further including, on an optical path of the measurement light applied to the sample, a polarization control element configured to adjust a polarization state of the measurement light.

The disclosure (3) relates to the polarization-sensitive optical coherence tomography apparatus according to the disclosure (1) or (2), further including a coupler (1) configured to split light from a light source into the measurement light applied to the sample and the reference light, wherein an intensity ratio of the measurement light and the reference light is 60:40 to 95:5.

The disclosure (4) relates to the polarization-sensitive optical coherence tomography apparatus according to any one of the disclosures (1) to (3), further including a polarization beam splitter configured to split the interference light into a vertical polarization component and a horizontal polarization component; a vertical polarization-sensitive detector configured to detect the vertical polarization component; and a horizontal polarization-sensitive detector configured to detect the horizontal polarization component.

The disclosure (5) relates to the polarization-sensitive optical coherence tomography apparatus according to any one of the disclosures (1) to (4), wherein light having a central wavelength within a range of 950 to 1400 nm is used as light from a light source.

The disclosure (6) relates to the polarization-sensitive optical coherence tomography apparatus according to any one of the disclosures (1) to (5), further including a wavelength swept light source, wherein the wavelength swept light source has a wavelength sweep width of light of 100 to 200 nm and a scan repetition frequency of 30 to 120 kHz.

The disclosure (7) relates to the polarization-sensitive optical coherence tomography apparatus according to any one of the disclosures (1) to (6), wherein the apparatus is configured to enable a user to perform tomographic imaging while carrying an objective lens unit.

The disclosure (8) relates to the polarization-sensitive optical coherence tomography apparatus according to any one of the disclosures (1) to (7), wherein the apparatus is configured to enable acquisition of a vertical polarization component and a horizontal polarization component of the interference light in alignment with a polarization axis of the sample.

The disclosure (9) relates to the polarization-sensitive optical coherence tomography apparatus according to any one of the disclosures (1) to (8), further including a varifocal lens with a variable focal length.

The disclosure (10) relates to the polarization-sensitive optical coherence tomography apparatus according to any one of the disclosures (3) to (9), further including:
an optical path length adjustment module including the reference-light collimators on the optical path of the reference light;
a coupler (2) configured to combine the reflected light of the measurement light with the reference light;
a measurement-light collimator configured to convert the measurement light into parallel light; and
a scanning mirror configured to scan the measurement light applied to the sample,
wherein
the apparatus does not comprise a polarization control element on an optical path between the coupler (1) and the reference-light collimators,
the two reference-light collimators are arranged to face each other so as to be positioned substantially in a straight line,
the reference-light collimators are adjustable in at least one of an angle or a position,
the optical path length adjustment module includes holders that hold the respective reference-light collimators, and
the holders enable adjustment of at least one of the angle or the position of the reference-light collimators.

The disclosure (11) relates to the polarization-sensitive optical coherence tomography apparatus according to any one of the disclosures (1) to (10), which is for industrial use.

### - Advantageous Effects of Invention

The disclosure can provide a polarization-sensitive optical coherence tomography apparatus capable of acquiring a tomographic image that more faithfully reflects a polarization characteristic of a sample.

### BRIEF DESCRIPTION OF THE DRAWINGS

FIG. 1 is a schematic diagram of an example of the OCT apparatus of the disclosure.
FIG. 2 is a schematic diagram of an example of an optical path length adjustment module.
FIG. 3 is a schematic diagram of another example of the OCT apparatus of the disclosure.
FIG. 4 includes OCT images obtained in Example 1.
FIG. 5 is an OCT image obtained in Example 2.

### DESCRIPTION OF EMBODIMENTS

Hereinafter, the disclosure is described in detail.

The disclosure relates to a polarization-sensitive optical coherence tomography (polarization-sensitive OCT) apparatus for acquiring a signal representing a polarization characteristic of a sample from interference light between reflected light of measurement light applied to the sample and reference light for reference, the apparatus including two reference-light collimators arranged to face each other on an optical path of the reference light, the reference-light collimators being configured to adjust an optical path length of the reference light (hereinafter, also referred to as the OCT apparatus of the disclosure).

Since the OCT apparatus of the disclosure includes the two reference-light collimators arranged to face each other on the optical path of the reference light and these collimators adjust the optical path length of the reference light, the apparatus facilitates accurate matching of the optical path lengths of the measurement light and the reference light. Even when the optical path length of the measurement light is variable in accordance with the size, shape, or imaging environment of a sample, the optical path length of the reference light can be adjusted in accordance with the variation using the reference-light collimators, which enables easy matching of the optical path lengths of the measurement light and the reference light. Thereby, a tomographic image is acquired that more faithfully reflects a polarization characteristic of the sample.

The reference-light collimators are arranged to face each other on the optical path of the reference light, and are preferably arranged to face each other such that the two collimators are positioned substantially in a straight line. Also, the collimators are preferably arranged to face each other such that light emitted from one (upstream) collimator is incident on the other (downstream) collimator. The downstream collimator is preferably used in a reverse mode (reverse input).

The reference-light collimators are preferably adjustable in at least one of an angle or a position, more preferably adjustable in an angle. The two reference-light collimators are preferably capable of changing at least one of an angle or a position independently of each other. In addition, preferably, no optical fiber is provided between the collimators (on the sides where the collimators face each other) so that the optical path length can be changed by operation of the collimators.

This configuration facilitates adjustment of the optical path length between the reference-light collimators and facilitates adjustment of the optical path length of the reference light.

The OCT apparatus of the disclosure preferably includes, on the optical path of the reference light, an optical path length adjustment module including the aforementioned reference-light collimators.

The optical path length adjustment module includes the reference-light collimators and preferably includes, for example, holders that hold the respective upstream and downstream reference-light collimators. The holders preferably enable adjustment of at least one of an angle or a position of the collimators, more preferably enable adjustment of an angle, still more preferably enables adjustment of an angle in two axes (X-Y).

The holders each may be fixed to a housing of the OCT apparatus, or may be connected to each other with a connector such as a rod, as in the case of an optical cage system.

The optical path length adjustment module may further include a connector that connects an optical fiber to the optical path length adjustment module.

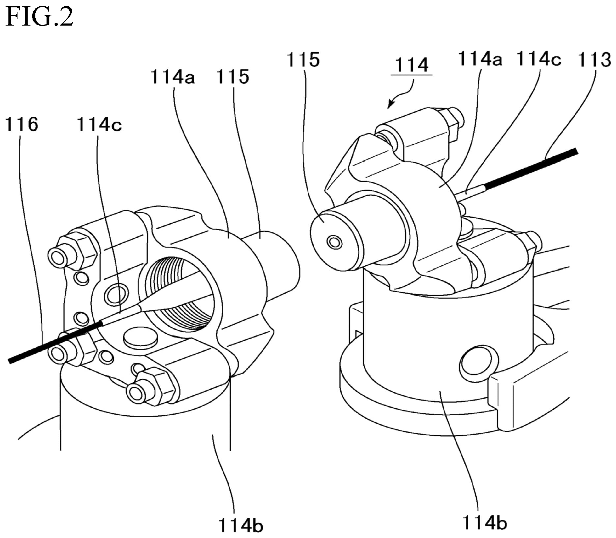

An example of this optical path length adjustment module is shown in FIG. 2 described later, but is not limited thereto.

The measurement light and the reference light are generated from light emitted from a light source. The OCT apparatus of the disclosure may include a light source.

The light source may be a low coherence light source, and is preferably a wavelength swept light source (frequency-scanning light source) that performs scanning while changing the frequency (wavelength) over time.

Examples of the wavelength swept light source include a wavelength swept laser utilizing a wavelength swept filter (e.g., driven with a polygonal mirror, driven with a galvanometer mirror), a FDML laser, a MEMS wavelength swept light source (e.g., MEMS VCSEL, external cavity MEMS Fabry-Pérot laser), and an SGDBR laser.

In the case of using a wavelength swept light source, the wavelength sweep width of light is preferably 100 to 200 nm, more preferably 120 nm or more, still more preferably 130 nm or more, while more preferably 180 nm or less, still more preferably 150 nm or less.

The scan repetition frequency is preferably 30 to 120 kHz, more preferably 40 kHz or more, while more preferably 100 kHz or less, still more preferably 80 kHz or less, further preferably 60 kHz or less.

This configuration can improve the resolution in the axial direction (depth direction).

Examples of light from the light source include visible light and infrared light, with near infrared light (NIR) being preferred. The light from the light source is preferably light having a central wavelength within a range of 800 to 2000 nm. The range of the central wavelength is more preferably 950 nm or more, while more preferably 1400 nm or less.

In particular, in order to achieve improved resolution in the axial direction (depth direction), light having a central wavelength of 1060 ± 50 nm or 1310 ± 50 nm is preferred, and light having a central wavelength of 1060 ± 50 nm is more preferred.

The OCT apparatus of the disclosure preferably includes a coupler (1) that splits light from a light source into measurement light applied to a sample and reference light for reference.

The intensity ratio between the measurement light and the reference light generated by the coupler (1) is preferably 60:40 to 95:5, more preferably 70:30 or more, still more preferably 80:20 or more, further preferably 85:15 or more, while more preferably 92:8 or less.

The intensity ratio within the above range can lead to an increased irradiation intensity of the measurement light applied to a sample, enhancing the sensitivity of OCT.

The OCT apparatus of the disclosure may include an objective lens for applying measurement light to a sample. The objective lens may be any lens that can concentrate measurement light on a sample, and is preferably a short-focus lens in order to achieve improved resolution in the lateral direction.

In order to flexibly operate the focal point in the depth direction and to obtain a tomographic image with high resolution, a varifocal lens with a variable focal length is also preferred.

The OCT apparatus of the disclosure preferably includes, on the optical path of the measurement light applied to a sample, a polarization control element that adjusts a polarization state of the measurement light (hereinafter, also referred to as a polarization control element (1)). The polarization control element (1) is preferably provided on the optical path between the coupler (1) and the objective lens.

Depending on the size, the shape, or the imaging environment of a sample, a probe (an objective lens unit) needs to be moved to various angles to capture an image; when this movement accordingly changes the bend of the optical fiber that transmits the measurement light, the polarization state of the measurement light may change.

The presence of the polarization control element (1) together with the aforementioned reference-light collimators enables more accurate compensation of the polarization state of the measurement light caused by the bend of the optical fiber.

The polarization state can be adjusted, for example, by observing OCT signals. The polarization state can be optimized for polarization-sensitive OCT by observing polarization OCT signals in two orthogonal polarization directions and by adjusting the polarization state so that the light and dark tones of polarization-induced fringes in the image are inverted relative to each other and that the contrast between the light and dark tones of each fringe is maximized.

The polarization control element (1) may be provided outside the housing of the OCT apparatus. This configuration facilitates adjustment of the polarization state to be optimal for a sample to be imaged particularly when an image is captured while a probe is carried.

A polarization control element may be provided on the optical path between the coupler (1) and the reference-light collimators. Still, in the OCT apparatus of the disclosure, the optical path length can be adjusted by the reference-light collimators, which eliminates the need for a polarization control element at this position.

The measurement light applied to a sample is reflected on the sample to become reflected light (sample light), which is then combined with the reference light having passed through the reference-light collimators to form interference light.

In the OCT apparatus of the disclosure, the reference-light collimators also function as reference surfaces. This eliminates the need for separate reference surfaces such as reference mirrors.

The OCT apparatus of the disclosure preferably includes a coupler (2) that combines the reflected light of the measurement light with the reference light. In this case, the reference-light collimators are preferably provided on the optical path of the reference light between the coupler (1) and the coupler (2).

The reflected light of the measurement light to be combined may be one that has passed through the coupler (1).

The interference light may be divided into two components by the coupler (2) and then emitted.

A polarization control element (also referred to as a polarization control element (2)) may be provided on the optical path between the reference-light collimators and the coupler (2) and on the optical path of the measurement light between the coupler (1) and the coupler (2).

The OCT apparatus of the disclosure acquires a signal representing a polarization characteristic of a sample from the interference light. The OCT apparatus of the disclosure preferably includes a detector that detects an interference signal based on the interference light. The detector is preferably a differential photodetector, and may have a function of amplifying signals. Alternatively, an amplifier may be provided separately.

The OCT apparatus of the disclosure preferably includes: a polarization beam splitter that splits the interference light into a vertical polarization component and a horizontal polarization component; a vertical polarization-sensitive detector that detects the vertical polarization component; and a horizontal polarization-sensitive detector that detects the horizontal polarization component.

This configuration enables acquisition of information from both of the vertical and horizontal polarization components and acquisition of a tomographic image that more faithfully reflects a polarization characteristic of a sample.

The polarization beam splitter is preferably provided on the optical path between the coupler (2) and the vertical polarization-sensitive detector or the horizontal polarization-sensitive detector.

Also, the polarization beam splitter is preferably provided on the optical paths of the two respective light components formed by dividing the interference light by the coupler (2).

A polarization control element (also referred to as a polarization control element (3)) may be provided on the optical path between the coupler (2) and the polarization beam splitter.

Examples of interferometers to be used in the OCT apparatus of the disclosure include, but are not limited to, a Michelson interferometer and a Mach-Zehnder interferometer.

Examples of OCT types to be used in the OCT apparatus of the disclosure include time domain OCT (TD-OCT) and Fourier domain OCT (FD-OCT). Examples of the FD-OCT include spectral domain OCT (SD-OCT) and swept source OCT (SS-OCT). Owing to its high sensitivity and deep measurable depth, SS-OCT is particularly preferred.

The OCT apparatus of the disclosure preferably further includes a measurement-light collimator that converts measurement light into parallel light. The measurement-light collimator is preferably provided on the optical path between the light source and the objective lens, more preferably provided on the optical path between the coupler (1) and the objective lens, still more preferably provided on the optical path between the polarization control element (1) and the objective lens.

In order to achieve improved resolution in the lateral direction, the measurement-light collimator is preferably a collimating lens having a large diameter. The diameter of the measurement-light collimator is preferably, for example, 2 mm or more, more preferably 4 mm or more, while preferably 12 mm or less in terms of carriability of a probe.

The OCT apparatus of the disclosure preferably further includes a scanning mirror that scans measurement light applied to a sample. The scanning mirror is preferably provided on the optical path between the light source and the objective lens, more preferably provided on the optical path between the coupler (1) and the objective lens, still more preferably provided on the optical path between the measurement-light collimator and the objective lens.

Examples of the scanning mirror include a galvanometer mirror, a polygonal mirror, and a MEMS mirror. Preferred among these is a galvanometer mirror, more preferred is a single-axis or two-axis galvanometer mirror, still more preferred is a two-axis galvanometer mirror.

The OCT apparatus of the disclosure preferably further includes a driver for driving the scanning mirror.

The OCT apparatus of the disclosure preferably further includes a data acquisition (DAQ) device that acquires interference signals generated by measurement light and reference light. The DAQ device preferably includes an A/D converter. The DAQ device preferably converts the acquired interference signals into digital data.

The OCT apparatus of the disclosure preferably further includes an arithmetic logic unit that generates an optical coherence tomographic image based on interference signals generated by measurement light and reference light. The arithmetic logic unit converts the interference signals into an image according to characteristics such as intensity to generate an optical coherence tomographic image.

The OCT apparatus of the disclosure preferably further includes a display that shows an optical coherence tomographic image obtained. The display may be of a stationary type or a portable type. A portable one is preferred because an image can be checked at the site where the image is obtained. The connection with the arithmetic logic unit may be wired or wireless. One display may be provided or multiple displays may be provided.

In the OCT apparatus of the disclosure, a device or component on which light is incident or from which light is emitted may be connected with an optical fiber. The optical fiber is preferably a single mode fiber (SMF). The optical fiber that enters the aforementioned polarization beam splitter (the optical fiber that forms the optical path between the coupler (2) and the polarization beam splitter) may be a polarization-maintaining fiber (PFM).

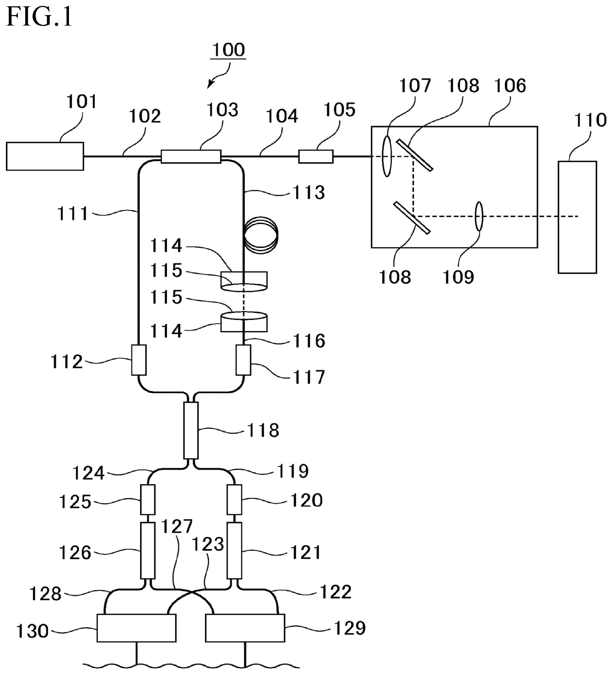

An example of the OCT apparatus of the disclosure is shown in FIG. 1, but the OCT apparatus of the disclosure is not limited thereto.

In an OCT apparatus 100 in FIG. 1, a wavelength swept light source 101 emits light to be used for OCT. The wavelength swept light source 101 outputs a trigger signal at every start of frequency scanning. A Mach-Zehnder interferometer detects light and outputs a K-clock signal for equal frequency interval sampling.

The light emitted from the wavelength swept light source 101 passes through an optical fiber 102 and is divided, in a coupler 103, into measurement light to be applied to a sample and reference light for reference at an intensity ratio of 90:10.

The measurement light is transmitted to a probe 106 through an optical fiber 104 having a length of several meters. The optical fiber 104 is provided with a polarization control element 105 that compensates for variation of the polarization state of the measurement light.

In the probe 106, the measurement light is converted by a collimator 107 into parallel light, which is then reflected on galvanometer mirrors 108 and incident on an objective lens 109. The galvanometer mirrors 108 are driven by a galvanometer mirror driver (not shown) and scans the parallel light in the X-Y direction, which is perpendicular to the optical axis. The parallel light incident on the objective lens 109 is focused on a sample 110 to be imaged, which is then reflected on the surface of the sample and, as reflected light (sample light), returns to the coupler 103 through the same optical path. The light is then emitted to an optical fiber 111 and incident on a coupler 118 through a polarization control element 112.

The reference light emitted from the coupler 103 passes through an optical fiber 113 and a collimator 115 of an upstream optical path length adjustment module 114, thereby being converted into parallel light. The parallel light passes through a reverse mode collimator 115 of a downstream optical path length adjustment module 114 and is guided into an optical fiber 116.

The upstream and downstream optical path length adjustment modules 114 each include a collimator 115 and the two collimators 115 are provided so as to face each other. A schematic diagram of the optical path length adjustment modules 114 is shown in FIG. 2. The optical path length adjustment modules 114 each include an angle adjustment holder 114a that holds a collimator 115 so as to enable angle adjustment in two axes (X-Y), a fixture 114b for fixing the angle adjustment holder 114a to the housing, and a fiber connector 114c that connects with the optical fiber 113 or the optical fiber 116. The optical path length of the reference light can be adjusted by moving the angle adjustment holder 114a and thereby adjusting the angle of the collimator 115.

In FIG. 2, the angle adjustment holder 114a is fixed to the housing via the fixture 114b; alternatively, the upstream and downstream angle adjustment holders 114a may be connected to each other using not the fixtures 114b but multiple steel rods to establish an optical cage system.

The reference light emitted from the downstream optical path length adjustment module 114 passes through the optical fiber 116 and a polarization control element 117 to enter a coupler 118, which is then combined with the sample light to form interference light.

The interference light is divided into two components by the coupler 118; one component passes through an optical fiber 119 and a polarization control element 120 to enter a polarization beam splitter 121, while the other component passes through an optical fiber 124 and a polarization control element 125 to enter a polarization beam splitter 126.

The components of the interference light entering the polarization beam splitters 121 and 126 are each divided into a horizontal polarization component and a vertical polarization component; the horizontal polarization components pass through an optical fiber 122 or 127 to enter a horizontal polarization-sensitive detector 129, while the vertical polarization components pass through an optical fiber 123 or 128 to enter a vertical polarization-sensitive detector 130.

The horizontal polarization-sensitive detector 129 and the vertical polarization-sensitive detector 130 detect interference signals respectively based on the horizontal polarization components and the vertical polarization components of the interference light.

The detected interference signals are collected by a DAQ device (A/D converter) (not shown) and converted into digital data. Collection of the interference signals is started by a trigger signal emitted from the wavelength swept light source 101, and is performed in synchronization with a K-clock signal.

An arithmetic logic unit of a controller generates an optical coherence tomographic image of the sample 110 based on the interference signals converted by the DAQ device, and shows the image on a mobile display (not shown).

The OCT apparatus of the disclosure is preferably configured such that a user can perform tomographic imaging while carrying an objective lens unit. Such a portable objective lens unit enables imaging from various positions and angles depending on the size and shape of a sample. In addition, this configuration enables acquisition of a vertical polarization component and a horizontal polarization component of interference light in alignment with the polarization axis of a sample.

When the objective lens unit is portable, the optical path length of measurement light tends to vary during imaging; however, the OCT apparatus of the present disclosure enables adjustment of the optical path length of reference light using the reference-light collimators, and thereby enables acquisition of a tomographic image that more faithfully reflects a polarization characteristic of a sample.

The objective lens unit may be, for example, a probe of the OCT apparatus, and preferably includes components such as a measurement-light collimator and a scanning mirror in addition to the objective lens.

The OCT apparatus of the disclosure is preferably configured such that a user can perform tomographic imaging while holding the objective lens unit in hand(s), more preferably configured such that a user can perform tomographic imaging while holding the objective lens unit in one hand.

In addition to the objective lens unit, the OCT apparatus of the disclosure may further include a unit that is carriable by a user during tomographic imaging. Examples of this carriable unit include a display.

In the OCT apparatus of the disclosure, preferably, the objective lens unit to be carried and the unit not to be carried are connected via an optical fiber, and the measurement light and the reflected light (sample light) thereof are transmitted through the optical fiber. In this embodiment, an object to be imaged, which is placed remote from the unit not to be carried, can be subjected to tomographic imaging by adjusting the length of the optical fiber so that the objective lens unit is placed near the object to be imaged. Further, since the apparatus is wired with the optical fiber, an object to be imaged placed remote from the unit not to be carried can also be subjected to high-resolution OCT measurement.

The length of the optical fiber is not limited and can be determined in accordance with the place of an object to be imaged; for example, the length may be 0.5 m or more, and is preferably 1 m or more. The length may be 5 m or less, and is preferably 3 m or less.

The optical fiber having a length within the above range enables a user to carry the objective lens unit and perform tomographic imaging while operating an instrument (e.g., polarization control element) placed in the body (housing) of the OCT apparatus.

The unit not to be carried is the body (housing) of the OCT apparatus, for example, and preferably includes components such as a light source, a polarization control element, a reference-light collimator, a detector, a DAQ device, and an arithmetic logic unit.

In the case where a different carriable unit is present in addition to the objective lens unit, this different unit and the objective lens unit or the unit not to be carried may be connected not necessarily via an optical fiber, but may be connected via an electric wire.

The OCT apparatus of the disclosure is preferably configured to enable acquisition of a vertical polarization component and a horizontal polarization component of interference light in alignment with the polarization axis of a sample. This enables acquisition of a tomographic image that more faithfully reflects a polarization characteristic of a sample.

The above configuration can be achieved with a portable objective lens unit (probe), for example.

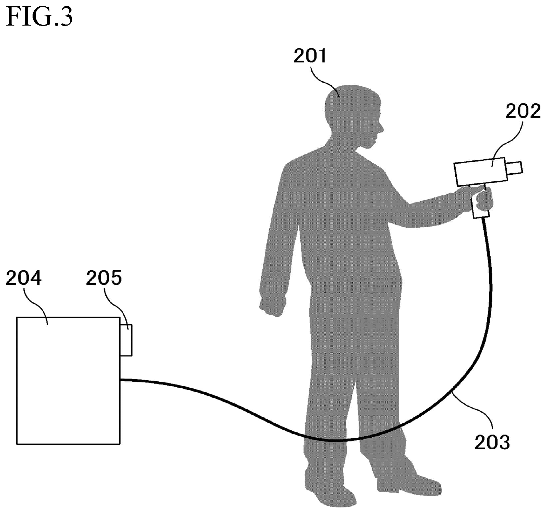

Another example (an example with a portable objective lens unit) of the OCT apparatus of the disclosure is shown in FIG. 3, but the OCT apparatus of the disclosure is not limited thereto.

In FIG. 3, a user 201 carries a probe 202 of the OCT apparatus in one hand. The probe 202 is connected to a housing 204 of the OCT apparatus via an optical fiber 203.

The housing 204 contains a light source, polarization control elements, reference-light collimators, a galvanic mirror driver, detectors, a DAQ system, an arithmetic logic unit, and the like. A polarization control element 205 for measurement light is provided outside the housing 204, and the user 201 can operate this element during tomographic imaging.

The OCT apparatus of the disclosure can be suitably applied to the whole range of polarization-sensitive optical coherence tomography regardless of fields. In particular, the OCT apparatus can be suitably applied to the fields in which a variety of samples are to be imaged and the optical path length of measurement light tends to vary depending on a sample and an imaging environment, such as the field of physics and chemistry and the field of industry.

The OCT apparatus of the disclosure is preferably for physics and chemistry or for industry, more preferably for industry.

It should be appreciated that a variety of modifications and changes in the configurations and other details may be made to the aforementioned embodiments without departing from the spirit and scope of the claims.

### EXAMPLES

The disclosure is more specifically described below with reference to, but not limited to, examples.

### Example 1

Using a polarization-sensitive OCT apparatus having the configuration shown in FIG. 1, OCT imaging was performed on the side surface of the cap of a glue stick (Kieiro PiT N, PT-NC), available from Tombow Pencil Co., Ltd.

An OCT light source was a high-speed wavelength swept light source (center wavelength: 1060 nm, sweep width: 140 nm, repetition scan frequency: 50 kHz), available from Excelitas. Reference-light collimators, F280APC-1064 available from Thorlabs Inc., were connected to collimator adapters (AD1109, available from Thorlabs Inc.) and mounted on kinematic mounts (KC05-T/M, available from Thorlabs), and two sets thereof were arranged to face each other.

The above OCT imaging was performed to obtain a sample image based on a light wave vibrating in the horizontal direction (P-polarized wave) and a sample image based on a light wave vibrating in the vertical direction (S-polarized wave). In order to remove noise, a Gaussian filter was applied to all sample images. Background information (BG image) was removed from each of the sample images of the P-polarized wave and the S-polarized wave to obtain a P-polarized-wave image and an S-polarized-wave image.

Processing according to the following equation was performed on all pixels of the obtained P-polarized-wave image and S-polarized-wave image to generate a retardation image. [Math. 1] $θ \left(x, z\right) = \frac{180}{π} arctan \left(\frac{{I}_{p} \left(x, z\right)}{{I}_{s} \left(x, z\right)}\right)$ (In the formula, Iₚ(x,z) and Iₛ(x,z) represent interference signals of the P-polarized wave and the S-polarized wave from which the background information was removed.)

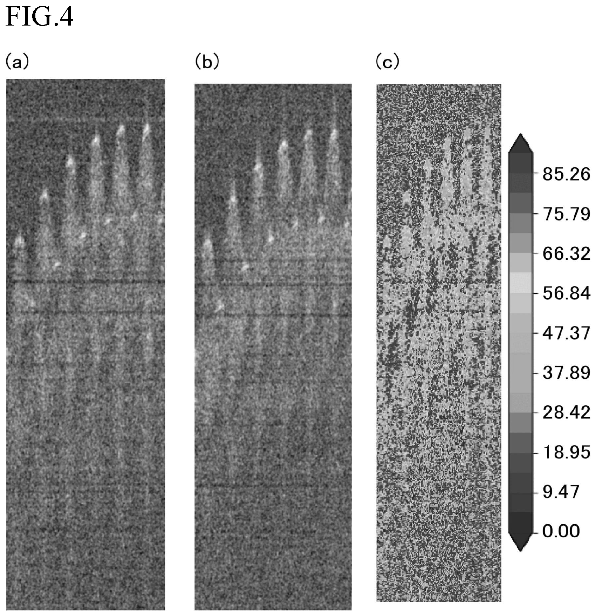

The obtained P-polarized-wave image, S-polarized-wave image, and retardation image were respectively shown in FIG. 4(a), FIG. 4(b), and FIG. 4(c).

The images show interference fringes characteristic of the sample, which well reflect the polarization characteristic of the sample.

### Example 2

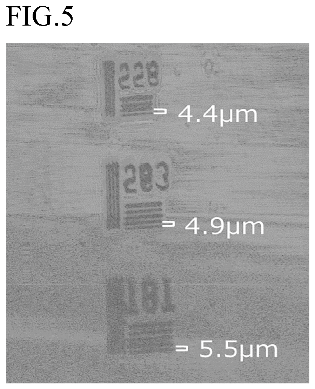

Using the same polarization-sensitive OCT apparatus as in Example 1, OCT imaging was performed on a fine-pattern NBS 1963A resolution (resolving power) test target (R2L2S1P1 available from Thorlabs Inc.). The obtained OCT image is shown in FIG. 5.

The structures are clearly resolved to approximately several micrometers, demonstrating that high lateral resolution was achieved.

### REFERENCE SIGNS LIST

100: OCT apparatus
101: wavelength swept light source
102, 104, 111, 113, 116, 119, 122, 123, 124, 127, 128: optical fiber
103, 118: coupler
105, 112, 117, 120, 125: polarization control element
106: probe
107: collimator
108: galvanic mirror
109: objective lens
110: sample
114: optical path length adjustment module
114a: angle adjustment holder
114b: fixture
114c: fiber connector
115: collimator
121, 126: polarization beam splitter
129: horizontal polarization-sensitive detector
130: vertical polarization-sensitive detector
201: user
202: probe
203: optical fiber
204: housing
205: polarization control element

## Claims

1. A polarization-sensitive optical coherence tomography apparatus for acquiring a signal representing a polarization characteristic of a sample from interference light between reflected light of measurement light applied to the sample and reference light for reference, the apparatus comprising
two reference-light collimators arranged to face each other on an optical path of the reference light,
the reference-light collimators being configured to adjust an optical path length of the reference light.

2. The polarization-sensitive optical coherence tomography apparatus according to claim 1, further comprising, on an optical path of the measurement light applied to the sample, a polarization control element configured to adjust a polarization state of the measurement light.

3. The polarization-sensitive optical coherence tomography apparatus according to claim 1 or 2, further comprising a coupler (1) configured to split light from a light source into the measurement light applied to the sample and the reference light,
wherein an intensity ratio of the measurement light and the reference light is 60:40 to 95:5.

4. The polarization-sensitive optical coherence tomography apparatus according to any one of claims 1 to 3, further comprising:
a polarization beam splitter configured to split the interference light into a vertical polarization component and a horizontal polarization component;
a vertical polarization-sensitive detector configured to detect the vertical polarization component; and
a horizontal polarization-sensitive detector configured to detect the horizontal polarization component.

5. The polarization-sensitive optical coherence tomography apparatus according to any one of claims 1 to 4,
wherein light having a central wavelength within a range of 950 to 1400 nm is used as light from a light source.

6. The polarization-sensitive optical coherence tomography apparatus according to any one of claims 1 to 5, further comprising a wavelength swept light source,
wherein the wavelength swept light source has a wavelength sweep width of light of 100 to 200 nm and a scan repetition frequency of 30 to 120 kHz.

7. The polarization-sensitive optical coherence tomography apparatus according to any one of claims 1 to 6,
wherein the apparatus is configured to enable a user to perform tomographic imaging while carrying an objective lens unit.

8. The polarization-sensitive optical coherence tomography apparatus according to any one of claims 1 to 7,
wherein the apparatus is configured to enable acquisition of a vertical polarization component and a horizontal polarization component of the interference light in alignment with a polarization axis of the sample.

9. The polarization-sensitive optical coherence tomography apparatus according to any one of claims 1 to 8, further comprising a varifocal lens with a variable focal length.

10. The polarization-sensitive optical coherence tomography apparatus according to any one of claims 3 to 9, further comprising:
an optical path length adjustment module including the reference-light collimators on the optical path of the reference light;
a coupler (2) configured to combine the reflected light of the measurement light with the reference light;
a measurement-light collimator configured to convert the measurement light into parallel light; and
a scanning mirror configured to scan the measurement light applied to the sample,
wherein
the apparatus does not comprise a polarization control element on an optical path between the coupler (1) and the reference-light collimators,
the two reference-light collimators are arranged to face each other so as to be positioned substantially in a straight line,
the reference-light collimators are adjustable in at least one of an angle or a position,
the optical path length adjustment module includes holders that hold the respective reference-light collimators, and
the holders enable adjustment of at least one of the angle or the position of the reference-light collimators.

11. The polarization-sensitive optical coherence tomography apparatus according to any one of claims 1 to 10, which is for industrial use.
